# EUROPEAN PATENT SPECIFICATION

(11) **EP 0 340 844 B1**
(45) Date of publication and mention of the grant of the patent: **05.04.1995**
(21) Application number: 89201063.8
(22) Date of filing: 25.04.1989
(51) Int. Cl.: C08G 67/02

(54) **Process for the preparation of polymers of carbon monoxide with unsaturated compounds**
Verfahren zur Herstellung von Polymeren von Kohlenmonoxyd und ungesättigten Verbindungen
Procédé de préparation de polymères de monoxyde de carbone et de composés insaturés

(30) Priority: 27.04.1988 NL 8801095
(43) Date of publication of application: 08.11.1989
(73) Proprietor: SHELL INTERNATIONALE RESEARCH MAATSCHAPPIJ B.V., 2596 HR Den Haag (NL)
(72) Inventor: Bakkum, Jacobus Adrianus, NL-1031 CM Amsterdam (NL); Rosenbrand, Gerrit Gerardus, NL-1031 CM Amsterdam (NL)

(56) References cited:
- EP-A- 0 248 483
- US-A- 4 143 096

## Description

The invention relates to a process for the preparation of polymers of carbon monoxide with one or more olefinically unsaturated compounds.

High molecular weight linear polymers of carbon monoxide with one or more olefinically unsaturated compounds (for the sake of brevity referred to as A), in which on the one hand, the monomer units -(CO)- and on the other hand, the units -A′- originating in the applied monomer A occur in alternating order, can be prepared by contacting the monomers with a solution of a palladium-containing catalyst composition in a diluent in which the polymers are insoluble or virtually insoluble. During polymerization, the polymers are obtained in the form of a suspension in the diluent. Thus far, the preparation of the polymers was carried out mainly batchwise.

The batch preparation of the polymers is carried out by introducing catalyst into a reactor which contains diluent and monomers and is at the desired temperature and pressure. As polymerization proceeds, the pressure drops, the concentration of the polymers in the diluent increases and the viscosity of the suspension rises. As a rule, polymerization is continued until the viscosity of the suspension has reached such a high value that continuing the process further would create difficulties, for instance in connection with heat removal. During batchwise polymer preparation, not only the temperature but also the pressure can optionally be kept constant, by adding monomers to the reactor during polymerization. As a rule, polymerization is terminated by cooling the reaction mixture to room temperature and releasing the pressure. Subsequently, the polymer suspension is withdrawn from the reactor and the reactor is flushed with diluent.

In the polymer preparation described hereinbefore, a problem is posed by reactor fouling. During polymerization, parts of the polymers formed are deposited on the reactor parts that are situated below the liquid level, such as the reactor wall, the baffle plates, the stirrer shaft, the stirrer blades, the cooling and heating coils and the plunger tubes. When the polymer suspension is withdrawn from the reactor, these deposited polymers remain behind in the reactor and they cannot be removed by flushing the reactor with diluent. In some cases, this reactor fouling may assume exorbitant dimensions; in extreme cases it may reach values of up to about 40%, which means that only about 60% of the prepared polymer will leave the reactor in the form of a suspension whereas about 40% will remain behind as a deposit on the reactor parts. The application of the polymerization on a technical scale may be severely hampered by this phenomenon.

In the past, the Applicant has found that reactor fouling can be somewhat reduced by polishing the areas onto which the polymer is generally deposited, or by lining these areas with certain materials, such as polypropylene, teflon or nylon (trademarks). Although these measures do indeed lead to some reduction of reactor fouling, they are insufficient for the effective control of the fouling problem.

Further research done by the Applicant has now shown that reactor fouling can be effectively controlled when care is taken that at the outset of polymerization, a small amount of solid matter is present in suspension in the diluent. It has further been found that the mininum amount of solid matter, expressed as g/l diluent, that should be present in order to achieve a significant reduction in reactor fouling is dependent on bulk density and average particle size of the solid matter involved, and is expressed by the formula $\text{a = 100 x b x c}$ , wherein a is the number of grams of the solid matter per litre of diluent, b is the numerical value of the average particle size expressed in metres and c is the numerical value of the bulk density expressed in kg/m³ .

The present patent application therefore relates to a process for the preparation of polymers, in which process a mixture of carbon monoxide is polymerized with one or more olefinically unsaturated compounds by contacting the mixture at an elevated temperature and pressure with a solution of a palladium-containing catalyst composition in a diluent in which the polymers are insoluble or virtually insoluble and in which process, before the monomers are contacted with the catalyst solution, a solid matter is suspended in the diluent, in a quantity which is given by the formula $\text{a ≧ 100 x b x c}$ 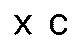 , wherein a is the number of grams of the solid matter per litre of diluent, b is the numerical value of the average particle size of the solid matter, expressed in metres and c is the numerical value of the bulk density of the solid matter, expressed in kg/m³.

The minimum amount of solid matter as g/l diluent that should be present in suspension in the diluent in order to achieve a significant reduction in reactor fouling is $\text{100 x b x c}$ . It has been found that the reduction of reactor fouling is larger according as a larger quantity by weight per l of diluent is used of a solid matter with a given average particle size and a given bulk density. This influence of the solid matter concentration upon reactor fouling is felt over a wide range of concentrations and attains its maximum value at a concentration of solid matter as grams/l diluent of about $\text{1000 x b x c}$ . Above this level of concentration, a further rise in solid matter concentration is not seen to lead to further reduction in reactor fouling of any significance. If the solid matter is suspended in the diluent with the exclusive purpose of reducing reactor fouling, then preferably not more solid matter than is given by the relation $\text{a = 1000 x b x c}$ will in general be used, as a further increase in concentration will only affect the reactor capacity without contributing appreciably to the curing of reactor fouling. Preference is given to the use of a concentration of solid matter which lies between $\text{250 x b x c}$ and $\text{1000 x b x c}$ , and in particular a concentration of solid matter which lies between $\text{500 x b x c}$ and $\text{1000 x b x c}$ .

As will be seen from the relation between a, b and c, a smaller amount of solid matter will suffice in the process of the invention according as the solid matter involved has a lower average particle size and/or a lower bulk density. As regards the average particle size of the solid matter that should be suspended in the diluent according to the invention, preference is given to materials having an average particle size of between 10⁻⁶ and 10⁻³ m, and in particular to materials having an average particle size of between 10⁻⁶ and 5 x 10⁻⁴ m. For a material to be suspended in the diluent, it is further preferred to choose a material having a bulk density of between 50 and 1000 kg/m³, and in particular having a bulk density of between 100 and 500 kg/m³.

As regards the nature of the solid matter that is suspended in the diluent in the process according to the invention, two possibilities may be distinguished, depending on the object aimed at in the process. If the sole purpose of the process is to reduce reactor fouling, it will be preferred in order to avoid contamination of the polymers to be prepared with material of a different kind, that the solid matter chosen be a polymer whose composition corresponds as much as possible with that of the polymer to be prepared. This means that in the preparation of an alternating copolymer of carbon monoxide with ethene, a corresponding polymer from an earlier polymer preparation is preferably suspended in the catalyst solution.

One of the most important properties of the present alternating polymers is their bulk density. This bulk density plays an important role both in the preparation and in the refining, storage, transport and processing of the polymers. In the preparation of the polymers, the maximum suspension concentration allowed, expressed as kg polymer/100 kg suspension, approximates about one thenth of the bulk density, expressed as kg/m³. This means that in the preparation of a polymer with a bulk density of 100 kg/m³, the maximum suspension concentration is about 10, while in the preparation of a polymer with a bulk density of 500 kg/m³, the maximum suspension concentration is about 50. This involves that in a reactor of the same volume, a fivefold increase of the bulk density allows about five times as much polymer to be prepared. As regards the working up of the polymers, for instance filtration, washing and drying, the amount of attached liquid is to a large extent determined by the polymer bulk density. It was found, for instance, that 1 kg of a polymer with a bulk density of 100 kg/m³ holds about 5 kg of diluent or wash liquor, whilst for a polymer with a bulk density of 500 kg/m³, this amount is no more than about 0.25 kg per kg. Naturally, this is of great importance for the amounts of liquid to be used when washing the polymers and to be removed when drying the polymers. As regards transport and storage, the polymers show more attractive flow and take up less space with higher bulk densities. As regards the processing of the polymers to shaped objects, polymers with a low bulk density often give problems in the processing equipment. Often, polymers with a low bulk density must first be compacted, for instance by extrusion, to render them suitable for further processing in the customary equipment. As the polymers have higher bulk densities, there will be less need for pretreatment of the material, which will be suitable as such for further processing.

During the investigation carried out by the Applicant into the control of reactor fouling by suspending a small amount of solid matter in the diluent, it was surprisingly found that this measure has a favourable effect not only on reactor fouling but also on the bulk densities of the polymers prepared. This may be elucidated as follows. In the preparation of high-molecular linear alternating polymers of carbon monoxide with one or more olefinically unsaturated compounds, some influence can be exerted on the bulk density of the polymer to be prepared by varying the reaction conditions, such as temperature, pressure, reaction time and catalyst composition. Once the reaction conditions are specified, a polymer of a certain bulk density, for instance s kg/m³, will as a rule be obtained. When applying the process of the invention with the object of reducing reactor fouling, one will suspend a polymer in the diluent whose composition corresponds as much as possible with that of the polymer to be prepared, in an amount, as g/l of diluent, of at least $\text{100 x a x b}$ , and preferably not more than $\text{1000 x a x b}$ . As regards the bulk density of the polymer that is suspended in the diluent, both polymers whose bulk densities substantially correspond with the bulk density s kg/m³ mentioned hereinbefore and polymers whose bulk densities are considerably higher or lower are suitable. The investigation has shown that when working under such reaction conditions that without suspension of polymer in the diluent a polymer is obtained with a bulk density of s kg/m³, polymerization with suspension of a polymer having a bulk density of s kg/m³ or higher generally leads to the preparation of a polymer with a bulk density higher than s kg/m³, and that the bulk density of the polymer obtained will as a rule be higher according as a polymer with a higher bulk density is suspended in the diluent. Therefore, if the process of the invention is applied with the object of reducing fouling, it is recommendable to select for the polymer to be suspended in the diluent, a polymer which has been prepared under reaction conditions which allow the production of polymer with the highest possible bulk density.

Thus far, the present invention has been discussed mainly with a view to reducing reactor fouling. However, the process of the invention can also be very suitably applied to serve two purposes, notably the reduction of fouling in the preparation of the present polymers and, at the same time, the preparation of intimate mixtures of the present polymers with other materials. As other materials, both inorganic and organic materials are eligible. It is imperative that the materials used should be insoluble or virtually insoluble in the diluent used. Examples of suitable materials are silica, alumina, talc, soot and polymers, such as polyethylene, polypropylene and polystyrene. The process of the invention can also very suitably be used for preparing intimate mixtures of two different polymers belonging to the class of linear alternating polymers of carbon monoxide with one or more olefinically unsaturated compounds. Thus can be prepared mixtures of a CO/ethene copolymer and a CO/ethene/propene terpolymer comprising mainly the copolymer, by carrying out the polymerization with CO and ethene as the monomers and a CO/ethene/propene terpolymer as a material that is suspended in the diluent, or mixtures of a CO/ethene copolymer and a CO/ethene/propene terpolymer comprising mainly the terpolymer, by carrying out the polymerization with CO, ethene and propene as the monomers and a CO/ethene copolymer as a material that is suspended in the diluent. Depending on the nature of the material suspended in the diluent and its applied quantity, the properties and possible uses of the products that can be prepared are considerably varied.

As was observed hereinbefore, if the sole purpose of the invention is to reduce reactor fouling, the quantity of solid matter to be suspended will be preferably limited to less than $\text{1000 x b x c}$ g/l diluent. If, however, the process is carried out with the object of preparing intimate mixture of the polymers with other materials, much larger quantities of solid matter will as a rule be suspended. An example of an intimate mixture prepared in accordance with the process of the invention is an intimate mixture of silica with a linear alternating copolymer of carbon monoxide and ethene.

In the process of the invention, use is made of a palladium-containing catalyst composition. Very suited for the present purpose are catalyst compositions on the basis of
a) a palladium compound,
b) an anion of an acid with a pKa of less than 6, and
c) a diphosphine of the general formula R¹R²P-R-PR³R⁴, wherein R¹, R², R³ and R⁴ represent the same or different hydrocarbyl groups which may optionally be polarly substituted and R represents a bivalent bridging group containing at least two carbon atoms in the bridge.

The palladium compound employed in the catalyst compositions as component a) is preferably a palladium salt of a carboxylic acid, and palladium acetate in particular. As component b), an anion of an acid with a pKa of less than 2 (determined in aqueous solution at 18 °C) is preferably used in the catalyst compositions. More in particular, an anion of a sulphonic acid, such as para-toluenesulphonic acid, or an anion of a carboxylic acid, such as trifluoroacetic acid, is preferred. In the catalyst compositions, component b) is preferably present in a quantity of from 0.5 to 50 and in particular of from 1 to 25 equivalents per mol of palladium. Component b) may be incorporated in the catalyst compositions in the form of an acid and/or in the form of a salt of a non-noble transition metal, such as a copper salt.

In the diphosphines of the general formula R¹R²P-R-PR³R⁴ that are eligible to be used as component c) in the catalyst compositions, groups R¹, R², R³ and R⁴ are preferably optionally polar-substituted aryl groups and in particular optionally polar-substituted phenyl groups. As polar substituents that may be present in the groups R¹, R², R³ and R⁴, may be mentioned, among others, alkoxy groups, such as methoxy groups, dialkylamino groups, such as dimethylamino groups, and thioalkyl groups, such as thiomethyl groups. Preference is given to the use in the catalyst compositions of diphosphines in which the groups R¹, R², R³ and R⁴ are aryl groups each having one or more polar substituents. Further, such diphosphines are preferred in which, per aryl group, at least one of these polar substituents occupies a position ortho in respect to the phosphorus atom to which the aryl group concerned is bound. Finally, preference is given to diphosphines in which the groups R¹, R², R³ and R⁴ are similar to one another and also to diphoshpines in which the polar substituents which may optionally be present in the groups R¹, R², R³ and R⁴ are alkoxy groups and in particular methoxy groups. As regards the bridging groups R present in the diphosphines, preference is given to bridging groups containing three atoms in the bridge, at least two of which are carbon atoms. Examples of suitable bridging groups R are the -CH₂-CH₂-CH₂- group, the -CH₂-C(CH₃)₂-CH₂- group and the -CH₂-Si(CH₃)₂-CH₂- group. Diphosphines that can be very suitably used as components c) in the catalyst compositions are 1,3-bis[di(2-methoxyphenyl)phosphino]propane, 1,3-bis[di(2,4-dimethoxyphenyl)phosphino]propane, 1,3-bis[di(2,6-dimethoxyphenyl)phosphino]propane, and 1,3-bis[di(2,4,6-trimethoxyphenyl)phosphino]propane.

Special preference is given to the use of catalyst compositions comprising 1,3-bis[di(2-methoxyphenyl)phosphino]propane as component c). Preferably, the diphosphines are used in the catalyst composition in a quantity of 0.5-2 and in particular of 0.75-1.5 mol per mol palladium.

In order to enhance the activity of the present catalyst compositions, it is preferred to incorporate a 1,4-quinone as component d). For this purpose, 1,4-benzoquinones and 1,4-naphthoquinones have been found to be very suitable. The quantity of 1,4-quinone used is preferably 10-1000 mol and in particular 25-250 mol per mol of palladium.

The polymerization of the invention is carried out in a diluent in which the polymers are insoluble or virtually insoluble. Both single diluents and compound diluents are suitable diluents. Examples of single diluents are lower aliphatic alcohols, such as methanol and ethanol. Examples of compound diluents are mixtures of lower aliphatic alcohols and lower aliphatic ketones, such as mixtures of methanol with acetone or with methyl ethyl ketone. In the present polymerization, a lower aliphatic alcohol, and in particular methanol, is preferred as diluent.

Olefinically unsaturated compounds that can be suitably polymerized with carbon monoxide according to the invention are both compounds consisting exclusively of carbon and hydrogen and compounds which, in addition to carbon and hydrogen, contain one or more hetero-atoms. The process of the invention is preferably applied for the preparation of polymers of carbon monoxide with one or more olefinically unsaturated hydrocarbons. Examples of suitable hydrocarbon monomers are ethene and other alpha-olefins, such as propene, butene-1, hexene-1 and octene-1, as well as styrene and alkyl-substituted styrenes, such as p-methyl styrene and p-ethyl styrene. The process of the invention is in particular very suitable for application in the preparation of copolymers of carbon monoxide with ethene and for the preparation of terpolymers of carbon monoxide with ethene and another olefinically unsaturated hydrocarbon, in particular propene.

The quantity of catalyst composition employed in the preparation of the polymers may vary within wide limits. The quantity of catalyst used per mol of olefinically unsaturated compound to be polymerized preferably contains 10⁻⁷-10⁻³ and in particular 10⁻⁶-10⁻⁴ mol of palladium.

The preparation of the polymers is preferably carried out at a temperature of 40-120 °C and a pressure of 20-150 bar and in particular at a temperature of 50-100 °C and a pressure of 30-100 bar. The molar ratio of olefinically unsaturated compounds relative to carbon monoxide in the mixture to be polymerized is preferably 10:1-1:5 and in particular 5:1-1:2.

The invention will now be illustrated with the aid of the following examples.

### Example 1

A carbon monoxide/ethene/propene terpolymer was prepared as follows. A mechanically stirred autoclave with a capacity of 100 l was charged with 45 kg of methanol and 3.5 kg of propene. After the contents of the autoclave were brought to 75 °C, a 1:1 carbon monoxide/ethene mixture was blown in until a pressure of 45 bar was reached. Subsequently, a catalyst solution was introduced into the autoclave which comprised
100 ml methanol,
100 ml toluene,
0.75 mmol palladium acetate,
15 mmol trifluoro acetic acid, and
0.90 mmol 1,3-bis[di(2-methoxyphenyl)phosphino]propane.

During polymerization, the pressure was kept at 45 bar by the introduction of a 1:1 carbon monoxide/ethene mixture. Polymerization was terminated after 47 hours by cooling the reaction mixture to room temperature and releasing the pressure. After the polymer suspension had been withdrawn through an opening in the bottom of the autoclave, the autoclave was flushed with 45 l of methanol in order to remove polymer that had remained behind. The methanol suspensions were combined and filtered. The terpolymer was washed with methanol and dried at 50 °C. The yield was 5.2 kg of terpolymer with an LVN(60) of 1.88 dl/g, a bulk density of 290 kg/m³ and a melting point of 228 °C. Inspection of the inside surface of the autoclave showed that a considerable portion of the prepared terpolymer had been deposited on the walls, the baffle plates and the stirrer. This terpolymer was removed from the autoclave by mechanical means, washed with methanol and dried at 50 °C. Its quantity was 1.5 kg. Thus, in this experiment, reactor fouling amounted to

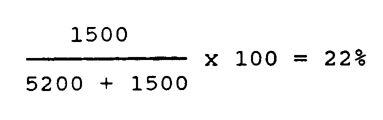

### Example 2

A carbon monoxide/ethene/propene terpolymer was prepared substantially in the same way as the terpolymer of Example 1, but with the following differences
a) the catalyst solution used comprised
   100 ml methanol,
   100 ml toluene,
   0.375 mmol palladium acetate,
   7.5 mmol trifluoroacetic acid, and
   0.45 mmol 1,3-bis[di(2-methoxyphenyl)phosphino]propane, and
b) the reaction time was 44 hours instead of 47 hours.

The yield was a polymer suspension comprising 4.5 kg of terpolymer with an LVN(60) of 2.28 dl/g, a bulk density of 65 kg/m³ and a melting point of 230 °C. 0.7 kg of terpolymer had remained behind in the autoclave; thus, in this case, reactor fouling amounted to 13.5%.

### Example 3

A carbon monoxide/ethene/propene terpolymer was prepared substantially in the same way as the terpolymer of Example 2, but with the following differences
a) the autoclave was charged with 35 kg instead of 45 kg of methanol and, in addition, a suspension of 300 g of a carbon monoxide/ethene/propene terpolymer in 10 kg of methanol, and
b) the reaction time was 31 hours instead of 44 hours.

The suspended terpolymer had an LVN(60) of 1.86 dl/g, an average particle size of 1.5 x 10⁻⁴ m, a bulk density of 65 kg/m³ and a melting point of 229 °C.

The yield was a polymer suspension comprising 5.8 kg of terpolymer with an LVN(60) of 2.39 dl/g, a bulk density of 85 kg/m³ and a melting point of 225 °C. 150 g of terpolymer had remained behind in the autoclave; thus, in this case, reactor fouling amounted to 2.7%.

### Example 4

A carbon monoxide/ethene/propene terpolymer was prepared substantially in the same way as the terpolymer of Example 1, but with the following differences
a) the autoclave was charged with 35 kg instead of 45 kg of methanol and, in addition, a suspension of 1000 g of a carbon monoxide/ethene/propene terpolymer in 10 kg of methanol,
b) the catalyst solution used comprised
   100 ml methanol,
   100 ml toluene,
   0.187 mmol palladium acetate,
   3.75 mmol trifluoroacetic acid, and
   0.225 mmol 1,3-bis[di(2-methoxyphenyl)phosphino]propane, and
c) the reaction time was 90 hours instead of 47 hours.

The suspended terpolymer had an LVN(60) of 2.39 dl/g, an average particle size of 3 x 10⁻⁴ m, a bulk density of 85 kg/m³ and a melting point of 225 °C.

The yield was a polymer suspension comprising 7.6 kg of terpolymer with an LVN(60) of 1.86 dl/g, a bulk density of 290 kg/m³ and a melting point of 229 °C. 150 g of terpolymer had remained behind in the autoclave; thus, in this case, reactor fouling amounted to 2.2%.

### Example 5

A carbon monoxide/ethene/propene terpolymer was prepared substantially in the same way as the terpolymer of Example 1, but with the following differences
a) the autoclave was charged with 35 kg instead of 45 kg of methanol, and, in addition, a suspension of 375 g of a carbon monoxide/ethene/propene terpolymer in 10 kg of methanol,
b) the catalyst solution used comprised
   100 ml methanol,
   100 ml toluene,
   0.187 mmol palladium acetate,
   3.75 mmol trifluoroacetic acid, and
   0.225 mmol 1,3-bis[di(2-methoxyphenyl)phosphino]propane,
c) the reaction temperature was 85 °C instead of 75 °C, and
d) the reaction time was 75 hours instead of 47 hours.

The suspended terpolymer had an LVN(60) of 1.99 dl/g, an average particle size of 1.5 x 10⁻⁴ m, a bulk density of 305 kg/m³ and a melting point of 226 °C.

The yield was a polymer suspension comprising 6.375 kg of terpolymer with an LVN(60) of 1.24 dl/g, a bulk density of 325 kg/m³ and a melting point of 224 °C. 50 g of terpolymer had remained behind in the autoclave; thus, in this case, reactor fouling amounted to 0.8%.

### Example 6

A carbon monoxide/ethene/propene terpolymer was prepared substantially in the same way as the terpolymer of Example 1, but with the following differences
a) in addition, 1000 g of a carbon monoxide/ethene/propene terpolymer was suspended in the autoclave,
b) the reaction temperature was 80 °C instead of 75 °C,
c) the catalyst solution used comprised
   100 ml methanol,
   100 ml toluene,
   1.5 mmol palladium acetate,
   30 mmol trifluoroacetic acid, and
   1.8 mmol 1,3-bis[di(2-methoxyphenyl)phosphino]propane, and
d) the reaction time was 28 hours instead of 47 hours.

The suspended terpolymer had an LVN(60) of 2.1 dl/g, an average particle size of 2 x 10⁻⁴ m, a bulk density of 350 kg/m³ and a melting point of 229 °C.

The yield was a polymer suspension comprising 12.1 kg of terpolymer with a bulk density of 365 kg/m³. 250 g of terpolymer had remained behind in the autoclave; thus, in this case, reactor fouling amounted to 2.2%.

### Example 7

A carbon monoxide/ethene copolymer was prepared as follows. A stirred autoclave with a capacity of 300 ml was charged with a catalyst solution comprising
150 ml methanol,
0.1 mmol palladium acetate,
20 mmol trifluoroacetic acid, and
0.1 mmol 1,3-bis[di(2-methoxyphenyl)phosphino]propane.

After air present in the autoclave had been removed by evacuation, ethene was blown in until a pressure of 30 bar was reached, followed by carbon monoxide until a pressure of 60 bar was reached. Subsequently, the contents of the autoclave were brought to 80 °C. Polymerization was terminated after 5 hours by cooling down to room temperature and releasing the pressure. The copolymer formed was present in the autoclave in the form of a spongy product which had been deposited onto the surface of the walls. The copolymer was removed from the autoclave by mechanical means, washed with methanol and dried at 50 °C. The yield was 8.9 g of copolymer. In this case, reactor fouling amounted to 100%.

### Example 8

A carbon monoxide/ethene copolymer was prepared substantially in the same way as the copolymer of Example 7, the difference being that in the present experiment, 0.5 g of silica was suspended in the catalyst solution. The suspended silica had an average particle size of less than 10⁻⁵ m and a bulk density of 55 kg/m³ .

A copolymer/silica mixture was obtained as a suspension in methanol. After filtration, washing with methanol and drying at 50 °C, the yield of copolymer/silica mixture was 9.5 g. In this case, no reactor fouling had occurred.

### Example 9

A carbon monoxide/ethene copolymer was prepared substantially in the same way as the copolymer of Example 7, the difference being that in the present experiment, 0.5 g of silica was suspended in the catalyst solution. The suspended silica had an average particle size of less than 10⁻⁵ m and a bulk density of 60 kg/m³.

A copolymer/silica mixture was obtained as a suspension in methanol. After filtration, washing with methanol and drying at 50 °C, the yield of copolymer/silica mixture was 9.6 g. In this case, reactor fouling was negligible.

Of Examples 1-9, Examples 3-6, 8 and 9 are examples in accordance with the invention. In these examples, copolymers of carbon monoxide with ethene and terpolymers of carbon monoxide with ethene and propene were prepared by a process in which a solid matter was suspended in the diluent in a quantity a which satisfied the formula $\text{a > 100 x b x c}$ 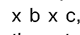 , before the monomers were contacted with the catalyst solution. In Example 3, for instance,
a quantity of 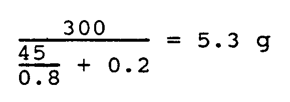
of solid matter was suspended per litre of diluent, the quantity required according to the invention being at least 100 x 1.5 x 10⁻⁴ x 65 = 0.98 g/l.

Examples 1, 2 and 7 fall outside the scope of the invention. They have been included in the patent application for comparison.

As regards the molecular weights of the prepared polymers, the following may be observed. According as the polymers have higher average molecular weights, their intrinsic viscosities too will as a rule be higher. In order to determine the intrinsic viscosity of the present polymer, four solutions are first of all prepared by dissolving the polymer in meta-cresol, at four different concentrations. Then the viscosity at 60 °C of each of these solutions relative to that of meta-cresol at 60 °C is determined in a viscometer. When Tₒ represents the efflux time of meta-cresol and Tₚ the efflux time of the polymer solution, the relative viscosity (ηᵣₑₗ) is determined by 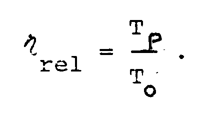
The inherent viscosity (ηᵢₙₕ) can be calculated from ηᵣₑₗ, according to the formula: 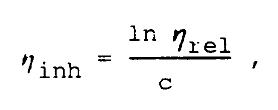
wherein c represents the polymer concentration as grams per 100 ml of solution. Plotting of the ηᵢₙₕ found for each of the four polymer solutions against the corresponding concentration (c) and subsequent extrapolation to c=0 leads to the intrinsic viscosity [η] as dl/g, which will hereinafter be referred to not as 'intrinsic viscosity', but by the designation recommanded by the IUPAC of 'Limiting Viscosity Number' (LVN). Generally, in the process of the invention, polymers are prepared which have LVN(60)'s varying from about 1 to 5. Such LVN's correspond with average molecular weights of about 15,000 to 150,000.

The average particle size of the solid matter which should be suspended in the diluent according to the invention is determined as follows. With the aid of a commercially available particle size analyser, a cumulative weight distribution of a representative sample of the solid matter is determined as a function of particle size. This cumulative weight distribution function is converted into a cumulative surface area distribution function, as described by Terence Allen in Particle size measurement (Chapman and Hall, London 1981), p. 122 ff. The average particle size is found as the median of the cumulative surface area distribution function.

With the aid of ¹³C-NMR analysis it was established that the carbon monoxide/ethene copolymers prepared in accordance with Examples 7-9 had a linear structure and consisted of units of the formula -(CO)-(C₂H₄)-. It was also established with the aid of ¹³C-NMR analysis that the carbon monoxide/ethene/-propene terpolymers prepared in accordance with Examples 1-6 had a linear structure and consisted of units of the formula -(CO)-(C₂H₄)- and units of the formula -(CO)-(C₃H₆)-, which units occurred randomly distributed within the terpolymers.

## Claims

1. Batchwise suspension polymerization process for the preparation of polymers, wherein a mixture of carbon monoxide with one or more olefinically unsaturated compounds is polymerized by contacting the mixture at an elevated temperature and pressure with a solution of a palladium-containing catalyst composition in a diluent in which the polymers form a suspension, characterized in that, before the monomers are contacted with the catalyst solution, a solid matter having an average particle size of 10⁻⁶-10⁻³ m and a bulk density of 50-1000 kg/m³ is suspended in the diluent, in a quantity which is given by the formula $\text{a ≧ 100 x b x c}$ , wherein a represents the number of grams of the solid matter per litre of diluent, b is the numerical value of the average particle size of the solid matter expressed in metres and c is the numerical value of the bulk density of the solid matter expressed in kg/m³ .

2. A process as claimed in claim 1, characterized in that the quantity of solid matter (a) that is suspended in the diluent is given by the relation $\text{1000 x b x c ≧ a ≧ 100 x b x c}$ .

3. A process as claimed in claim 1 or 2, characterized in that the solid matter that is suspended in the diluent has an average particle size of 10⁻⁶-5x10⁻⁴ m.

4. A process as claimed in one or more of claims 1-3, characterized in that the solid matter that is suspended in the diluent has a bulk density of 100-500 kg/m³.

5. A process as claimed in one or more of claims 1-4, characterized in that the solid matter that is suspended in the diluent has a bulk density which is higher than or as high as the bulk density of the polymer which under the given reaction conditions will be obtained when no polymer is suspended in the diluent, and that the suspended solid is a polymer whose composition corresponds as much as possible with the polymer to be prepared.

6. A process as claimed in claim 1, characterized in that the composition of the solid matter that is suspended in the diluent differs from that of the polymer to be prepared.

7. A process as claimed in claim 6, characterized in that the quantity of solid matter (a) that is suspended in the diluent is given by the formula
$\text{a > 1000 x b x c.}$

8. A process as claimed in one or more of claims 1-7, characterized in that a catalyst composition is used which is based upon
a) a palladium compound,
b) an anion of an acid with a pKa of less than 6, and
c) a diphosphine of the general formula R¹R²P-R-PR³R⁴, Therein R¹, R², R³ and R⁴ represent the same or different hydrocarbyl groups which may optionally be polarly substituted and R represents a bivalent bridging group containing at least two carbon atoms in the bridge.

9. A process as claimed in claim 8, characterized in that it is carried out at a temperature of 50-100 °C, a pressure of 30-100 bar and a molar ratio in the mixture to be polymerized, of the olefinically unsaturated compounds relative to carbon monoxide, of 5:1-1:2, and in that per mol of olefinically unsaturated compound to be polymerized, such a quantity of catalyst composition is used as to contain 10⁻⁶-10⁻⁴ mol of palladium.

## Patentansprüche

1. Absatzweises Suspensionspolymerisierungsverfahren zur Herstellung von Polymeren, in welchem ein Gemisch aus Kohlenmonoxid und einer oder mehreren olefinisch ungesättigten Verbindung(en) polymerisiert wird, indem das Gemisch bei einer erhöhten Temperatur und erhöhtem Druck mit einer Lösung einer palladiumhaltigen Katalysatorzusammensetzung in einem Verdünnungsmittel, in welchem die Polymere eine Suspension bilden, polymerisiert wird, dadurch gekennzeichnet, daß, bevor die Monomere mit der Katalysatorlösung in Berührung gebracht werden, ein Feststoff mit einer durchschnittlichen Teilchengröße von 10⁻⁶ bis 10⁻³ m und einer Schüttdichte von 50 bis 1000 kg/m³ in dem Verdünnungsmittel suspendiert wird, und zwar in einer Menge, die durch die Formel $\text{a ≧ 100 x b x c}$ vorgegeben ist, in der a die Menge in Gramm des Feststoffs pro Liter Verdünnungsmittel darstellt, b der numerische Wert der durchschnittlichen Teilchengröße des Feststoffs, ausgedrückt in Metern, und c der numerische Wert der Schüttdichte des Feststoffs, ausgedrückt in kg/m³, sind.

2. Ein Verfahren wie in Anspruch 1 beansprucht, dadurch gekennzeichnet, daß die Menge des Feststoffs (a), der in dem Verdünnungsmittel suspendiert wird, durch die Relation $\text{1000 x b x c ≧ a ≧ 100 x b x c}$ 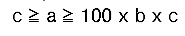 vorgegeben ist.

3. Ein Verfahren wie in Anspruch 1 oder 2 beansprucht, dadurch gekennzeichnet, daß der Feststoff, der in dem Verdünnungsmittel suspendiert wird, eine durchschnittliche Teilchengröße von 10⁻⁶ bis 5 x 10⁻⁴ m hat.

4. Ein Verfahren wie in einem oder mehreren der Ansprüche 1 bis 3 beansprucht, dadurch gekennzeichnet, daß der Feststoff, der in dem Verdünnungsmittel suspendiert wird, eine Schüttdichte von 100 bis 500 kg/m³ hat.

5. Ein Verfahren wie in einem oder mehreren der Ansprüche 1 bis 4 beansprucht, dadurch gekennzeichnet, daß der Feststoff, der in dem Verdünnungsmittel suspendiert wird, eine Schüttdichte aufweist, die höher als oder genauso hoch wie die Schüttdichte des Polymers ist, welches unter den gegebenen Reaktionsbedingungen erhalten wird, wenn kein Polymer in dem Verdünnungsmittel suspendiert wird, und daß der suspendierte Feststoff ein Polymer ist, dessen Zusammensetzung so weit wie möglich der Zusammensetzung des herzustellenden Polymers entspricht.

6. Ein Verfahren wie in Anspruch 1 beansprucht, dadurch gekennzeichnet, daß die Zusammensetzung des Feststoffes, der in dem Verdünnungsmittel suspendiert wird, sich von der des herzustellenden Polymers unterscheidet.

7. Ein Verfahren wie in Anspruch 6 beansprucht, dadurch gekennzeichnet, daß die Menge an Feststoff (a), der in dem Verdünnungsmittel suspendiert wird, durch die Formel $\text{a > 1000 x b x c}$ 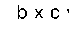 vorgegeben ist.

8. Ein Verfahren wie in einem oder mehreren der Ansprüche 1 bis 7 beansprucht, dadurch gekennzeichnet, daß eine Katalysatorzusammensetzung verwendet wird, die basiert auf
a) einer Palladiumverbindung,
b) einem Anion einer Säure mit einem pKa-Wert von weniger als 6, und
c) einem Diphosphin der allgemeinen Formel R¹R²P-R-PR³R⁴, in welcher die Gruppen R¹, R², R³ und R⁴ die gleichen oder unterschiedliche Kohlenwasserstoffgruppen darstellen, welche gegebenenfalls polarsubstituiert sein können, und R eine zweiwertige Brückengruppe darstellt, welche mindestens zwei Kohlenstoffatome in der Brücke enthält.

9. Ein Verfahren wie in Anspruch 8 beansprucht, dadurch gekennzeichnet, daß es bei einer Temperatur von 50 bis 100°C, einem Druck von 30 bis 100 bar und einem molaren Verhältnis in dem zu polymerisierenden Gemisch der olefinisch ungesättigten Verbindungen relativ zu Kohlenmonoxid von 5:1 bis 1:2 durchgeführt wird, und daß pro Mol olefinisch ungesättigter zu polymerisierender Verbindung eine Menge an Katalysatorzusammensetzung verwendet wird, die 10⁻⁶ bis 10⁻⁴ Mol Palladium enthält.

## Revendications

1. Procédé discontinu de polymérisation en suspension pour la préparation de polymères, dans lequel un mélange de monoxyde de carbone avec un ou plusieurs composés oléfiniquement insaturés est polymérisé par mise en contact du mélange à une température et une pression élevées avec une solution d'une composition catalytique contenant du palladium dans un diluant dans lequel les polymères sont insolubles, caractérisé en ce que, avant que les monomères ne soient mis en contact avec la solution de catalyseur, une matière solide ayant une grosseur moyenne de particules de 10⁻⁶ à 10⁻³ m et une masse volumique apparente de 50 à 1000 kg/m³ est mise en suspension dans le diluant, à raison d'une quantité qui est indiquée par la formule $\text{a ≧ 100 x b x c}$ , où a représente le nombre de grammes de la matière solide par litre de diluant, b est la valeur numérique de la grosseur moyenne de particules de la matière, exprimée en mètres, et c est la valeur numérique de la masse volumique apparente de la matière solide, exprimée en kg/m³.

2. Un procédé selon la revendication 1, caractérisé en ce que la quantité de matière solide (a) qui est mise en suspension dans le diluant est donnée par la relation $\text{1000 x b x c ≧ a ≧ 100 x b x c}$ 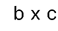 .

3. Un procédé selon la revendication 1 ou 2, caractérisé en ce que la matière solide qui est mise en suspension dans le diluant a une grosseur moyenne de particules de 10⁻⁶ à 5 x 10⁻⁴ m.

4. Un procédé selon une ou plusieurs des revendications 1-3, caractérisé en ce que la matière solide qui est mise en suspension dans le diluant a une masse volumique apparente de 100-500 kg/m³.

5. Un procédé selon une ou plusieurs des revendications 1-4, caractérisé en ce que la matière solide qui est mise en suspension dans le diluant a une masse volumique apparente qui est plus élevée ou aussi élevée que la masse volumique apparente du polymère qui, dans les conditions de réaction données, sera obtenu quand il n'y a pas de polymère en suspension dans le diluant, et que la matière solide mise en suspension est un polymère dont la composition correspond autant que possible à celle du polymère à préparer.

6. Un procédé selon la revendication 1, caractérisé en ce que la composition de la matière solide qui est mise en suspension dans le diluant diffère de celle du polymère à préparer.

7. Un procédé selon la revendication 6, caractérisé en ce que la quantité de matière solide (a) qui est mise en suspension dans le diluant est donnée par la formule
$\text{a > 1000 x b x c}$ .

8. Un procédé selon une ou plusieurs des revendications 1-7, caractérisé en ce qu'on utilise une composition catalytique qui est à base de
a) un composé du palladium,
b) un anion d'un acide d'un pKa de moins de 6, et
c) une diphosphine de la formule générale R¹R²P-R-PR³R⁴, dans laquelle R¹, R², R³ et R⁴ représentent des groupes hydrocarbyle identiques ou différents qui peuvent éventuellement porter des substituants polaires et R représente un groupe bivalent formant pont contenant au moins deux atomes de carbone dans le pont.

9. Un procédé selon la revendication 8, caractérisé en ce qu'il est mis en oeuvre à une température de 50 à 100°C, une pression de 30 à 100 bars et un rapport molaire, dans le mélange à polymériser, des composés oléfiniquement insaturés au monoxyde de carbone compris entre 5:1 et 1:12, et en ce que, par mole de composé olefiniquement insaturé à polymériser, on utilise une quantité de composition catalytique telle qu'elle contienne de 10⁻⁶ à 10⁻⁴ mole de palladium.
